# EUROPÄISCHE PATENTSCHRIFT

(11) **EP 1 356 548 B1**
(45) Veröffentlichungstag und Bekanntmachung des Hinweises auf die Patenterteilung: **20.01.2010**
(21) Anmeldenummer: 02712740.6
(22) Anmeldetag: 30.01.2002
(51) Int. Cl.: H01R 13/629

(54) **KONTAKTVORRICHTUNG ZUR LÖSBAREN VERBINDUNG EINER BEWEGBAREN GERÄTEEINHEIT MIT ORTSFESTEN KONTAKTKÖRPERN**
CONTACT DEVICE FOR THE DETACHABLE CONNECTION OF A MOBILE APPLIANCE UNIT TO FIXED CONDUCTOR RAILS
DISPOSITIF DE CONTACT POUR LA LIAISON LIBERABLE D'UN BLOC D'ASSEMBLAGE MOBILE AVEC DES RAILS CONDUCTEURS FIXES

(30) Priorität: 01.02.2001 DE 10106270
(43) Veröffentlichungstag der Anmeldung: 29.10.2003
(73) Patentinhaber: SIEMENS AKTIENGESELLSCHAFT, 80333 München (DE)
(72) Erfinder: CIHLAR, Michaela, 04207 Leipzig (DE); HAAS, Volker, 06804 Muldenstein (DE); SCHMIDT, Mario, 04178 Leipzig (DE); ZICKMANTEL, Mathias, 04329 Leipzig (DE)
(86) Internationale Anmeldenummer: PCT/DE2002/000379
(87) Internationale Veröffentlichungsnummer: WO 2002/061891

(56) Entgegenhaltungen:
- DE-A- 3 729 454
- DE-U- 29 505 257

## Beschreibung

Die Erfindung betrifft eine Kontaktvorrichtung zur lösbaren Verbindung einer Geräteeinheit mit ortsfesten Stromschienen durch Verschiebung der Geräteeinheit, mit:
- wenigstens einem Kontaktelement sowie einen von diesen ausgehenden abgewinkelten, einen Befestigungsschenkel aufweisenden Kontaktglied aus Flachmaterial,
- einem Anschlussstück zur Verbindung des Kontaktgliedes mit einem Leiter,
- einem Gehäuse aus Isolierstoff mit einer Kammer zur Aufnahme einer aus dem Kontaktglied und dem Anschlussstück gebildeten Kontakteinheit,
- wobei der Befestigungsschenkel zur Verbindung mit dem Anschlussstück mit einem Durchgangsloch für Befestigungsmittel versehen ist.

Ein wesentliches Anwendungsgebiet von Kontaktvorrichtungen dieser Art sind elektrische Schaltanlagen, insbesondere für Niederspannung, bei denen die Geräteeinheiten eine Kombination von Schaltgeräten enthalten, wie sie zum Betrieb von elektromotorischen Antrieben benötigt werden. Die Größe der Geräteeinheiten hängt unter anderem von der zu schaltenden Leistung ab und wird aus einem Raster einheitlicher Maße ausgewählt, um den zur Verfügung stehenden Raum gut zu nutzen.

Eine Kontaktvorrichtung mit den eingangs genannten Merkmalen ist durch die DE 295 05 257 U1 bekannt geworden. Die Kontakteinheit wird dabei in dem Gehäuse aufgenommen, das hierzu aus zwei durch Rastelemente verbindbaren Hälften besteht. Das Gehäuse wird seinerseits mittels angeformter Rastelemente in einem Träger gehalten, der entsprechend der Anzahl insgesamt benötigter Kontakteinheiten mit fensterartigen Öffnungen versehen ist.

Eine weitere ähnliche Kontaktvorrichtung mit diesen Merkmalen ist durch die DE 37 29 454 C3 bekannt geworden. Die Kontakteinheiten sind hier einteilig aus Flachmaterial hergestellt und weisen zur Bildung von einander zugewandten Kontaktelementen ein gegabeltes Ende auf. Ein Gehäuse mit mehreren Kammern nimmt eine entsprechende Zahl von Kontakteinheiten auf.

Im allgemeinen werden für die Einspeisung und den Abgang einer Geräteeinheit jeweils drei oder vier Kontakteinheiten benötigt, die mit entsprechend angeordneten ortsfesten Stromschienen zusammenwirken. Hierbei kommt es darauf an, dass die Kontaktkraft in jeder der Kontakteinheiten einen vorbestimmten ausreichenden Wert aufweist, der nur durch die betreffende Kontakteinheit selbst gegeben ist. Durch Maßabweichungen in der Anordnung der Stromschienen und der Kontakteinheiten kann es jedoch zu einem relativen Versatz der Baugruppen und damit, aufgrund einer mechanischen Vorspannung, zu einer schädlichen Verminderung der Kontaktkraft kommen. Der Erfindung liegt in diesem Zusammenhang die Aufgabe zu Grunde, mit einfachen Mitteln für einen Ausgleich von Maßabweichungen (Toleranzen) zu sorgen, um die benötigten Kontaktkräfte sicher zu stellen.

Diese Aufgabe wird gemäß der Erfindung durch folgende Merkmale gelöst:
- das Anschlussstück besitzt einen abgewinkelten und sich etwa rechtwinklig zur Richtung der Verschiebung erstreckenden und zum Befestigungsschenkel (8) parallelen Montageschenkel,
- in der Kammer befindet sich eine quer zur Richtung der Verschiebung angeordnete Zwischenwand als Widerlager des Befestigungsschenkels und des Montageschenkels,
- die Zwischenwand enthält ein Fenster zur verschiebbaren Führung eines zwischen dem Befestigungsschenkel und dem Montageschenkel angeordneten und mit diesen verbundenen Führungsstückes,
- das Führungsstück ist um so viel dicker als die Zwischenwand ausgebildet, dass die Kontakteinheit in der Kammer quer zur Richtung der Verschiebung begrenzt beweglich ist.

Die trotz der neuen Funktionsweise überraschende Einfachheit der Kontaktvorrichtung nach der Erfindung beruht darauf, dass die zusammenwirkenden Teile ebene Arbeitsflächen besitzen können und dass die Verschiebbarkeit der Kontakteinheit innerhalb des Gehäuses der Kontaktvorrichtung ohne besondere Einstellung oder Justierung lediglich durch Zusammenbau der Einzelteile zustande kommt.

Eine rationelle Fertigung von Kontaktvorrichtungen kann nach einer Weiterbildung der Erfindung dadurch erleichtert werden, dass das Führungsstück bei rechteckiger Grundform C-förmig gestaltet ist und ein zur Führung in dem Fenster der Zwischenwand dienendes Mittelteil sowie zwei Endschenkel aufweist, wobei die Endschenkel den Montageschenkel des Anschlussstückes zwischen sich aufnehmen und an die Breite des Montageschenkels angepasst sind. Diese Gestaltung der Teile ermöglicht es, das Kontaktglied, das Führungsstück und das Anschlussstück in das Gehäuse der Kontaktvorrichtung derart einzulegen, dass die Teile ihre richtige Position finden und ohne Zuhilfenahme einer Vorrichtung durch einfache Verbindungsmittel (Schraube und Mutter) zu einer Kontakteinheit verbunden werden können, die in dem Gehäuse begrenzt verschiebbar ist.

Wie schon erwähnt, werden zum Betrieb der unterschiedlichen Verbraucher entsprechend angepasste Geräteeinheiten benötigt, deren Kontaktvorrichtungen daher für unterschiedlich hohe Belastungsströme bemessen sein müssen. Durch eine Ausgestaltung der Erfindung wird erreicht, dass die Kontaktvorrichtung bei unveränderten äußeren Abmessungen für einen großen Bereich von Belastungsströmen verwendbar ist. Dies geschieht dadurch, dass das Durchgangsloch im Befestigungsschenkel des Kontaktgliedes als Langloch ausgebildet ist, das sich in der Längsrichtung des Befestigungsschenkels erstreckt und derart bemessen ist, dass beim gleichsinnig ineinander geschachtelten Zusammenfügen von zwei gleichen Kontaktgliedern eine sich durch beide Befestigungsschenkel erstreckende Öffnung mit wenigstens kreisförmigem Querschnitt verbleibt. Somit kann die Stromtragfähigkeit der Kontaktvorrichtung vom einfachen auf den doppelten Wert erhöht werden.

Durch die Verschachtelung der Kontaktwinkel entsteht ein gegenseitiger Versatz der mit den Stromschienen zusammenwirkenden Kontaktelemente. Hierdurch bleibt die vom Benutzer aufzubringende Kraft unverändert, da zunächst die Kontaktelemente des einen Kontaktgliedes und anschließend die des zweiten Kontaktgliedes in Eingriff mit der zugehörigen Stromschiene gelangen.

Gleichfalls unter Verwendung der gleichen Kontaktglieder kann Stromtragfähigkeit der Kontaktvorrichtung nochmals erhöht werden, wenn die Kammer des Gehäuses für die Aufnahme von drei Kontaktgliedern bemessen ist, wobei zwei der Kontaktglieder gleichsinnig ineinander geschachtelt sind und das dritte Kontaktglied um 180° gedreht angeordnet ist und wobei ferner die Langlöcher in den drei Befestigungsschenkeln unter Bildung einer Öffnung mit wenigstens kreisförmiger Gestalt korrespondieren.

In einer Schaltanlage der eingangs erläuterten Art können Geräteeinheiten unterschiedlich geführt und mechanisch gesichert sein. Insbesondere für relativ große und schwere Geräteeinheiten hat sich dabei bewährt, die Geräteeinheiten als Einschübe auszubilden und die Schaltfelder durch Fachböden in Einschubfächer zu unterteilen. Dies hat zur Folge, dass die Kontaktelemente bis zu ihrem Eingreifen in die ortsfesten Kontaktkörper entlang dem geerdeten Fachboden bewegt werden. Wird nach einer Ausgestaltung der Erfindung an dem Gehäuse der Kontaktvorrichtung unterhalb der Kontaktelemente der Kontakteinheit eine vorspringende Schutzlippe angeordnet, so kann verhindert werden, dass zufällig im Einschubfach verbliebene leitende Fremdkörper einen Störlichtbogen zünden.

Die Erfindung ist sowohl für einpolige als auch für mehrpolige Kontaktvorrichtungen verwendbar. Da in Schaltanlagen häu-, fig Stromschienenanordnungen mit drei oder vier parallel angeordneten Stromschienen benutzt werden, erweist es sich als vorteilhaft, wenn die Kontaktvorrichtung hieran angepasst ist und hierzu ein Gehäuse mit einer der Anzahl der ortsfesten Stromschienen entsprechenden Anzahl von Kammern für Kontakteinheiten aufweist und dass ferner zwischen den Anschlussstücken der Kontakteinheiten und angrenzenden Wänden der Geräteeinheit eine gemeinsame isolierende Abdeckung angeordnet ist.

Als Beispiel für die Anwendung von Kontaktvorrichtungen nach der Erfindung wurde vorstehend die Einspeisung aus Feldschienen oder anderen Stromschienensystemen in Schaltanlagen genannt. Dabei werden die mit der Kontaktvorrichtung zusammenwirkenden Kontaktkörper durch solche Stromschienen gebildet. Die gleichen Kontaktvorrichtungen eignen sich jedoch auch für den Ausgang von Geräteeinheiten, insbesondere wenn diese als Einschübe ausgebildet sind. In diesem Fall gehören die Kontaktkörper zu ortsfesten Anschlussvorrichtungen für weiterführende Kabel oder Leitungen.
Die Erfindung wird im folgenden anhand des in den Figuren gezeigten Ausführungsbeispieles näher erläutert.

Die Figur 1 zeigt in einer perspektivisch auseinander gezogenen Darstellung ein vierpoliges Gehäuse einer Kontaktvorrichtung und die Komponenten einer Kontakteinheit.

Die Figuren 2 und 3 zeigen die Anordnung gemäß der Figur 1 im montierten Zustand einer Kontakteinheit in einem Längsschnitt und einem Querschnitt.

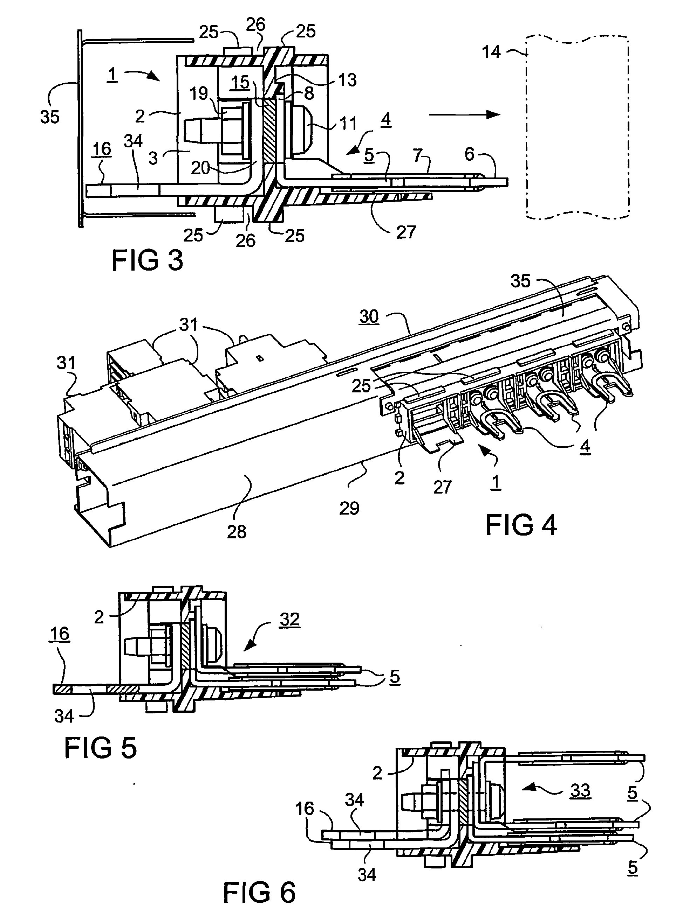

Eine Geräteeinheit mit daran montierter Kontaktvorrichtung ist in der Figur 4 perspektivisch dargestellt.

Die Figuren 5 und 6 zeigen in einer Darstellung entsprechend der Figur 3, jedoch in einem dieser gegenüber etwas kleineren Maßstab, Ausführungsbeispiele mit zwei bzw. drei Kontaktgliedern je Kontakteinheit.

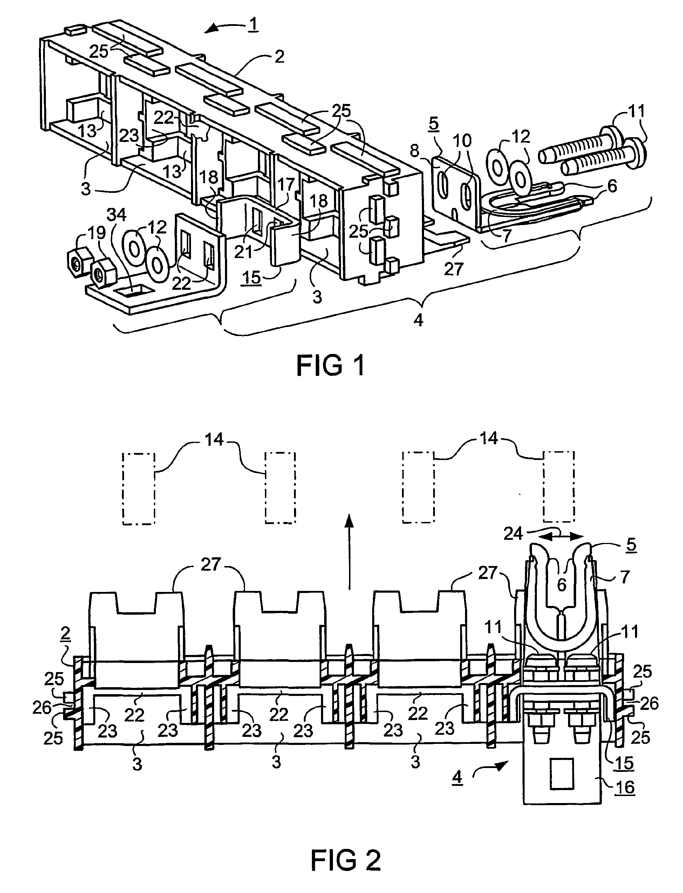

Die in der Figur 1 veranschaulichte Kontaktvorrichtung 1 umfasst ein Gehäuse 2 aus elektrisch isolierendem Material mit vier Kammern 3 zur Aufnahme einer entsprechenden Anzahl von Kontakteinheiten 4. Eine solche Kontakteinheit ist in der Figur 1 auseinander gezogen dargestellt, um die verschiedenen Komponenten zu veranschaulichen.

Zum Aufstecken auf eine in der Figur 3 angedeutete Stromschiene 14 weist jede der Kontakteinheiten 4 ein Kontaktglied 5 aus Flachmaterial mit zwei gefederten Kontaktelementen 6 auf. Eine an den Kontaktelementen 6 anliegende Biegefeder 7, z. B. nach der DE 37 31 625 A1, sorgt für eine angemessene Kontaktkraft. Die Kontaktelemente 6 gehen in einen rechtwinklig abgewinkelten Befestigungschenkel 8 über, der mit zwei parallelen Langlöchern 10 versehen ist. Zwei als Befestigungsmittel vorgesehene Schrauben 11 mit Beilagscheiben 12 dienen zur Befestigung des Kontaktgliedes 5, wie noch erläutert wird.

Als Widerlager und Führungsfläche für das Kontaktglied 5 enthält jede der Kammern 3 eine Zwischenwand 13, deren Anordnung am besten aus der Figur 3 zu ersehen ist. Wie man erkennt, liegt das Kontaktglied 5 mit seinem Befestigungsschenkel 8 derart an der Zwischenwand 13 an, dass es gegen die beim Aufstecken auf die angedeutete Stromschiene 14 auftretenden Kräfte an dem Gehäuse 2 wirksam abgestützt ist. Auf der dem Befestigungsschenkel 8 des Kontaktgliedes 5 gegenüberliegenden Seite der Zwischenwand 13 weist die Kontakteinheit 4 ein Führungsstück 15 sowie ein Anschlussstück 16 auf. Das Führungsstück 15 besitzt entsprechend einer C-förmigen Grundform ein Mittelteil 17 sowie rechtwinklig abstehende Endschenkel 18. Die Länge des Mittelteiles 17 bzw. der Abstand der Endschenkel 18 ist so bemessen, dass ein Montageschenkel 20 des Anschlussstückes 16 auf dem Mittelteil 17 zur Auflage kommen kann. Für den Durchtritt der Befestigungsschrauben 11 sind der Mittelteil 17 des Anschlussstückes 18 und der Montageschenkel 20 des Anschlussstückes 16 ähnlich dem Befestigungsschenkel 8 des Kontaktgliedes 5 mit fluchtenden Langlöchern 21 bzw. 22 versehen.

Wie am besten aus einer Betrachtung der Figuren 2 und 3 zu ersehen ist, besitzen die Zwischenwände 13 in den Kammern 3 des Gehäuses 2 Fenster 22, die dem Führungsstück 15 angepasst sind. Das Fenster 22 erfasst den Mittelteil 17 des Führungsstückes 15 entsprechend der Figur 3, während seitliche Taschen 23 (Figur 2) die Endschenkel 18 aufnehmen. Durch eine geeignete Wahl der Abmessungen der zusammenwirkenden Teile ist dafür gesorgt, dass das Führungsstück 15 in dem Fenster 22 verkantungsfrei geführt ist und dabei entsprechend einem in der Figur 2 eingezeichneten Doppelpfeil 15 relativ zu dem Gehäuse 2 um ein gewisses Maß verschiebbar ist. Die Kontakteinheiten 4 können sich somit unabhängig voneinander und von der Position des Gehäuses 2 auf die in der Figur 2 angedeuteten Stromschienen 14 in der Weise ausrichten, dass die jeweiligen Kontaktkräfte nur von den Eigenschaften der Kontaktglieder 5 abhängen.

Die Kontaktglieder 5, die Führungsstücke 15 und die Anschlussstücke 16 sind durch einfache Arbeitsgänge wie Schneiden, Lochen, Biegen bzw. Abkanten herstellbare Teile mit ebenen Arbeitsflächen. Beim Zusammenfügen und Einführen in die Kammern 3 richten sich die Teile gegenseitig aus und erhalten ihre gegenseitige Verbindung und zugleich die Verbindung mit dem Gehäuse 2 durch die Schrauben 11. Wesentlich ist hierbei die Bemessung der Zwischenwand 13 und des Führungsstückes 15 in der Weise, dass das Führungsstück 15 über die Zwischenwand 13 etwas übersteht und somit auch nach dem Festziehen der Schrauben 11 und Muttern 19 ein Spiel verbleibt, das die erwähnte Verschiebbarkeit der Kontakteinheiten 4 relativ zu dem Gehäuse 2 gewährleistet.

Unterhalb der Kontaktglieder 5 erstreckt sich jeweils eine von dem Gehäuse 2 ausgehende Schutzlippe 27, welche in Schaltanlagen mit Fachböden die Sicherheit gegen Störlichtbogen verbessert.

Aus den Figuren 1 und 4 ist ersichtlich, dass das Gehäuse 2 der Kontaktvorrichtung 1 am gesamten Umfang mit Haltenasen 25 versehen ist. Diese sind in zwei parallelen Reihen mit einem in der Figur 3 gezeigten Abstand 26 angeordnet. Hierdurch wird eine Nut gebildet, mit der die Kontaktvorrichtung 1 in einen Ausschnitt einer Wand 28 eingeführt werden kann, wie dies die Figur 4 veranschaulicht. Die Wand 28 gehört zu einem kastenartigen Gehäuse 29 einer Geräteeinheit 30, die frontseitig elektrische Schalt-, Steuer- und Schutzgeräte 31 trägt. Die Kontaktvorrichtung 1 ist in dem Beispiel nach der Figur 4 mit vier Kontakteinheiten 4 bestückt, während die verbleibende Kammer 3 des Gehäuses 2 leer ist. Diese kann bei Bedarf mit einer weiteren Kontakteinheit versehen werden, wenn z. B. die Stromschienenanordnung der betreffenden Schaltanlage drei Phasenleiter und einen Neutralleiter aufweist.

Es wurde eingangs schon darauf hingewiesen, dass sich die Kontaktvorrichtung nach der Erfindung bei unveränderten Abmessungen mit Kontakteinheiten ausrüsten lässt, die jeweils zwei oder drei Kontaktglieder enthalten. In diesem Zusammenhang ist in der Figur 5 ein Ausführungsbeispiel veranschaulicht, bei dem Kontakteinheiten 32 mit jeweils zwei Kontaktgliedern 5 verwendet werden. Die beiden Kontaktglieder sind gleichsinnig ineinander verschachtelt angeordnet, wobei aufgrund der Langlöcher 10 in den Befestigungsschenkeln 8 für den Durchtritt der Befestigungsschrauben 11 ausreichende, d.h. mindestens dem Durchmesser der Schrauben 11 entsprechenden Öffnungen verbleiben. Durch die Verschachtelung sind die Kontaktelemente 6 der beiden Kontaktglieder 5 gegeneinander versetzt. Daher kommt es beim Aufschieben der Kontakteinheiten 32 auf die Stromschienen 14 nicht zu einer Verdopplung des Kraftbedarfes wie dies der Fall wäre, wenn die Kontaktelemente 6 miteinander fluchten.

In dem weiteren Ausführungsbeispiel gemäß der Figur 6 sind Kontakteinheiten 33 mit jeweils drei Kontaktgliedern 5 vorgesehen. Hierbei entspricht die Position von zwei der Kontaktglieder 5 der Anordnung gemäß der Figur 5, während das dritte Kontaktglied 5 eine um 180° gedrehte Stellung einnimmt.

Um die Kontakteinheit 33 gemäß der Figur 6 an die erhöhte Stromtragfähigkeit anzupassen, ist ferner ein zweites Anschlussstück 16 vorgesehen, dass ähnlich wie die Kontaktglieder 5 gleichsinnig ineinandergeschachtelt mit dem bei der Standardausführung der Kontaktvorrichtung (Figur 3) vorhandenen Kontaktglied 5 angeordnet ist. Auch hier ermöglichen die Langlöcher 22 (Figur 1) den Durchtritt der Befestigungsschrauben 11. Somit können Kontakteinheiten mit einfacher bis dreifacher Stromtragfähigkeit unter Verwendung einheitlicher Teile hergestellt werden. Dementsprechend können Geräteeinheiten entsprechend der Figur 4 mit Kontaktvorrichtungen einheitlicher Abmessungen und mit einem einheitlichen kastenförmigen Gehäuse, jedoch unterschiedlichen Schalt-, Steuer- und Schutzgeräten zum Bau von Schaltanlagen bereit gestellt werden.

Die elektrische Verbindung der Geräte 13 mit der Kontaktvorrichtung 1 kann in bekannter Weise durch (nicht gezeigte) Kabel erfolgen, die auf die Anschlussstücke 16 geklemmt werden. Hierzu sind Langlöcher 34 (Figur 1) vorgesehen. Diese ermöglichen es im Fall der Kontakteinheit 33 sinngemäß wie schon beschrieben, mittels einer einzigen Klemmschraube ein Kabel mit beiden Anschlussstücken 16 zu verbinden. Die Kabel können in dem kastenförmigen Gehäuse 29 der Geräteeinheit verlegt und an geeigneter Stelle durch Öffnungen einer die Geräte 31 aufnehmenden Tragplatte nach vorn geführt werden. Zweckmäßig kann dabei in dem kastenförmigen Gehäuse 29 eine isolierende Abdeckung 35 angeordnet sein, die in der Figur 3 als Einzelteil gezeigt ist. Die Abdeckung 35 verbessert gleichfalls die Sicherheit gegen Kriechströme und Störlichtbögen.

Die Kontaktvorrichtung 1 nach der Erfindung ist vorstehend im Zusammenhang mit einer steckbaren Geräteeinheit 30 beschrieben worden, in welcher sie die Aufgabe der Verbindung mit einspeisenden Stromschienen hat. Dabei kann vorgesehen sein, dass zu den Verbrauchern führende Kabel direkt an den Schaltgeräten 31 angeschlossen werden. Soll demgegenüber der Austausch einer Geräteeinheit möglichst schnell durchführbar sein, so ist hierfür die Bauform der Geräteeinheit als Einschub vorteilhaft, der Trennkontakte sowohl für die Einspeisung als auch für den Ausgang besitzt. Diese Trennkontakte können durch gleiche Kontaktvorrichtungen 1 gebildet sein.

## Patentansprüche

1. Kontaktvorrichtung (1) zur lösbaren Verbindung einer Geräteeinheit (30) mit ortsfesten Stromschienen (14) durch Verschiebung der Geräteeinheit, mit:
- wenigstens einem Kontaktelemente (6) sowie einen von diesen ausgehenden abgewinkelten, einen Befestigungsschenkel (8) aufweisenden Kontaktglied (5) aus Flachmaterial,
- einem Anschlussstück (16) zur Verbindung des Kontaktgliedes (5) mit einem Leiter,
- einem Gehäuse (2) aus Isolierstoff mit einer Kammer (3) zur Aufnahme einer aus dem Kontaktglied (5) und dem Anschlussstück (16) gebildeten Kontakteinheit (4),
- wobei der Befestigungsschenkel (8) zur Verbindung mit dem Anschlussstück (16) mit einem Durchgangsloch (10) für Befestigungsmittel versehen ist,
**gekennzeichnet durch** folgende Merkmale:
- das Anschlussstück (16) besitzt einen abgewinkelten und sich etwa rechtwinklig zur Richtung der Verschiebung erstreckenden und zum Befestigungsschenkel (8) parallelen Montageschenkel (20),
- in der Kammer (3) befindet sich eine quer zur Richtung der Verschiebung angeordnete Zwischenwand (13) als Widerlager des Befestigungsschenkels (8) und des Montageschenkels (20),
- die Zwischenwand (13) enthält ein Fenster (22) zur verschiebbaren Führung eines zwischen dem Befestigungsschenkel (8) und dem Montageschenkel (20) angeordneten und mit diesen verbundenen Führungsstückes (15),
- das Führungsstück (15) ist um so viel dicker als die Zwischenwand (13) ausgebildet, dass die Kontakteinheit (4) in der Kammer (3) quer zur Richtung der Verschiebung begrenzt beweglich ist.

2. Kontaktvorrichtung nach Anspruch 1,
**dadurch gekennzeichnet, dass**
das Führungsstück (15) bei rechteckiger Grundform C-förmig gestaltet ist und ein zur Führung in dem Fenster (22) der Zwischenwand (13) dienendes Mittelteil (17) sowie zwei Endschenkel (18) aufweist, wobei die Endschenkel (18) den Montageschenkel (20) des Anschlussstückes (16) zwischen sich aufnehmen und an die Breite des Montageschenkels (20) angepasst sind.

3. Kontaktvorrichtung nach Anspruch 1 oder 2,
**dadurch gekennzeichnet, dass**
das Durchgangsloch (10) im Befestigungsschenkel (8) des Kontaktgliedes (5) als Langloch (10) ausgebildet ist, das sich in der Längsrichtung des Befestigungsschenkels (8) erstreckt und derart bemessen ist, dass beim gleichsinnig ineinander geschachtelten Zusammenfügen von zwei gleichen Kontaktgliedern (5) eine sich durch beide Befestigungsschenkel (8) erstreckende Öffnung mit wenigstens kreisförmigem Querschnitt verbleibt.

4. Kontaktvorrichtung nach Anspruch 3,
**dadurch gekennzeichnet, dass** die Kammer (3) des Gehäuses (2) für die Aufnahme von drei Kontaktgliedern (5) bemessen ist, wobei zwei der Kontaktglieder (5) gleichsinnig ineinander geschachtelt sind und das dritte Kontaktglied (5) um 180° gedreht angeordnet ist und wobei ferner die Langlöcher (10) in den drei Befestigungsschenkeln (8) unter Bildung einer Öffnung mit wenigstens kreisförmiger Gestalt korrespondieren.

5. Kontaktvorrichtung nach einem der vorangehenden Ansprüche,
**dadurch gekennzeichnet, dass**
an dem Gehäuse (2) unterhalb der Kontaktelemente (5) der Kontakteinheit (4) eine vorspringende Schutzlippe (27) angeordnet ist.

6. Kontaktvorrichtung nach einem der vorangehenden Ansprüche,
**dadurch gekennzeichnet, dass**
das Gehäuse (2) eine der Anzahl paralleler ortsfester Stromschienen (14) entsprechende Anzahl von Kammern (3) für Kontakteinheiten (4) aufweist und dass zwischen den Anschlussstücken (16) der Kontakteinheiten (4) und angrenzenden Wänden (28) der Geräteeinheit (30) eine gemeinsame isolierende Abdeckung (35) angeordnet ist.

## Claims

1. Contact apparatus (1) for detachable connection of an appliance unit (30) to fixed busbars (14), by movement of the appliance unit, having:
- at least one contact element (6) as well as an angled contact member (5) which originates from this contact element (6), has an attachment limb (8) and is composed of flat material,
- a connecting piece (16) for connection of the contact member (5) to a conductor,
- a housing (2) composed of insulating material having a chamber (3) for holding a contact unit (4) which is formed from the contact member (5) and the connecting piece (16),
- with the attachment limb (8) being intended for connection to the connecting piece (16) by means of a through-hole (10) for attachment means,
**characterized by** the following features:
- the connecting piece (16) has an angled mounting limb (20), which extends approximately at right angles to the direction of movement and is parallel to the attachment limb (8),
- an intermediate wall (13) which is arranged transversely with respect to the direction of movement is located in the chamber (3), as an opposing bearing for the attachment limb (8) and for the mounting limb (20),
- the intermediate wall (13) contains a window (22) for moveable guidance of a guide piece (15) which is arranged between the attachment limb (8) and the mounting limb (20) and is connected to them,
- the guide piece (15) is designed to be so much thicker than the intermediate wall (13) that the contact unit (4) can move in a restricted manner in the chamber (3) transversely with respect to the direction of movement

2. Contact apparatus according to Claim 1,
**characterized in that** the guide piece (15) is C-shaped with a rectangular basic shape, and has a center part (17), which is used for guidance in the window (22) in the intermediate wall (13), as well as two end limbs (18), with the end limbs (18) holding the mounting limb (20) of the connecting piece (16) between them and being matched to the width of the mounting limb (20).

3. Contact apparatus according to Claim 1 or 2,
**characterized in that** the through-hole (10) in the attachment limb (8) in the contact member (5) is in the form of an elongated hole (10), which extends in the longitudinal direction of the attachment limb (8) and is of such a size that, when two identical contact members (5) are joined together, interleaved with one another in the same sense, an opening remains which extends through both attachment limbs (8) and has at least a circular cross section.

4. Contact apparatus according to Claim 3,
**characterized in that** the chamber (3) in the housing (2) is designed for accommodation of three contact members (5), with two of the contact members (5) being interleaved with one another in the same sense, and the third contact member (5) being arranged rotated through 180°, and, furthermore, with the elongated holes (10) in the three attachment limbs (8) corresponding, forming an opening with an at least circular shape.

5. Contact apparatus according to one of the preceding claims, **characterized in that** a projecting protective lip (27) is arranged on the housing (2), underneath the contact elements (5) of the contact unit (4).

6. Contact apparatus according to one of the preceding claims, **characterized in that** the housing (2) has a number of chambers (3) for contact units (4), corresponding to the number of parallel fixed busbars (14), and **in that** a common insulating cover (35) is arranged between the connecting pieces (16) of the contact units (4) and the adjacent walls (28) of the appliance unit (30).

## Revendications

1. Dispositif ( 1 ) de contact pour l'assemblage amovible d'une unité ( 30 ) d'appareil à des rails ( 14 ) de courant fixes en faisant coulisser l'unité d'appareil, comprenant :
- au moins un élément ( 6 ) de contact ainsi qu'un organe ( 5 ) de contact en matériau plat, coudé en partant de cet élément et ayant une branche ( 8 ) de fixation,
une pièce ( 16 ) de connexion pour la liaison de l'organe ( 5 ) de contact à un conducteur,
- un boîtier ( 2 ) en matière isolante ayant une chambre ( 3 ) de réception d'une unité ( 4 ) de contact formée de l'organe ( 5 ) de contact et de la pièce ( 16 ) de connexion,
dans lequel la branche ( 8 ) de fixation est munie pour la liaison à la pièce ( 16 ) de connexion d'un trou ( 16 ) de passage d'un moyen de fixation,
**caractérisé par** les caractéristiques suivantes :
- la pièce ( 16 ) de connexion a une branche ( 20 ) de montage s'étendant de façon coudée et à peu près perpendiculairement à la direction du coulissement et parallèle à la branche ( 8 ) de fixation,
- dans la chambre où se trouve, comme butée de la branche ( 8 ) de fixation et de la branche ( 20 ) de montage, une paroi ( 13 ) intermédiaire disposée transversalement à la direction du coulissement,
- la paroi ( 13 ) intermédiaire comporte une fenêtre ( 22 ) pour le guidage coulissant d'une pièce ( 15 ) de guidage disposé entre la branche ( 8 ) de fixation et la branche ( 20 ) de montage et assemblée à celles-ci,
- la pièce ( 15 ) de guidage est tellement plus épaisse que la paroi ( 13 ) intermédiaire que l'unité ( 4 ) de contact a une mobilité limitée dans la chambre ( 3 ) perpendiculairement à la direction du coulissement.

2. Dispositif de contact suivant la revendication 1,
**caractérisé en ce que**
la pièce ( 15 ) de guidage est en forme de C pour une forme de base rectangulaire et a une partie ( 17 ) médiane servant au guidage dans la fenêtre ( 22 ) de la paroi ( 13 ) intermédiaire, ainsi que deux branches ( 18 ) d'extrémité, les branches ( 18 ) d'extrémité recevant entre elles la branche ( 20 ) de montage de la pièce ( 16 ) de connexion et étant adaptées à la largeur de la branche ( 20 ) de montage.

3. Dispositif de contact suivant la revendication 1 ou 2,
**caractérisé en ce que**
le trou ( 10 ) de passage dans la branche ( 8 ) de fixation de l'organe ( 5 ) de contact est constitué sous la forme d'une boutonnière ( 10 ) qui s'étend dans la direction longitudinale de la branche ( 8 ) de fixation et qui a des dimensions telles que, lors de l'emboîtage l'un dans l'autre dans le même sens de deux organes ( 5 ) de contact identiques, il subsiste une ouverture de section transversale au moins circulaire traversant les deux branches ( 8 ) de fixation.

4. Dispositif de contact suivant la revendication 3,
**caractérisé en ce que**
la chambre ( 3 ) du boîtier ( 2 ) est dimensionnée pour la réception de deux organes ( 5 ) de contact, deux des organes ( 5 ) de contact étant emboîtés l'un dans l'autre dans le même sens et le troisième organe ( 5 ) de contact étant tourné à 180° et dans lequel, en outre, les boutonnières ( 10 ) dans les trois branches ( 8 ) de fixation se correspondent avec formation d'une ouverture ayant au moins une forme circulaire.

5. Dispositif de contact suivant l'une des revendications précédentes,
**caractérisé en ce que** sur le boîtier ( 2 ) est disposée, en dessous des éléments ( 5 ) de contact de l'unité ( 4 ) de contact, une lèvre ( 27 ) de protection en saillie.

6. Dispositif de contact suivant l'une des revendications précédentes,
**caractérisé en ce que** le boîtier ( 2 ) a un nombre de chambres ( 3 ) pour des unités ( 4 ) de contact, qui correspond au nombre de rails ( 14 ) de courant parallèles, fixes et **en ce que** entre les pièces ( 6 ) de connexion des unités ( 4 ) de contact et des parois ( 28 ) voisines de l'unité ( 30 ) d'appareil est disposé un recouvrement ( 35 ) commun isolant.
